# EUROPEAN PATENT SPECIFICATION

(11) **EP 3 676 701 B1**
(45) Date of publication and mention of the grant of the patent: **29.11.2023**
(21) Application number: 17928220.7
(22) Date of filing: 12.10.2017
(51) Int. Cl.: G06F 16/958, G06F 16/25, G06F 9/44, G06F 8/30, G06F 8/41

(54) **SCHEMA SYNTAX**
SCHEMASYNTAX
SYNTAXE DE SCHÉMA

(43) Date of publication of application: 08.07.2020
(73) Proprietor: Hewlett-Packard Development Company, L.P., Spring, TX 77389 (US)
(72) Inventor: GRAHAM, Christoph J., Houston, Texas 77070 (US); JIANG, Wenjie, Pudong Shanghai 201203 (CN); SHI, Shuwu, Pudong Shanghai 201203 (CN); WANG, Zeng, Pudong Shanghai 201203 (CN)
(74) Representative: Bryers LLP
(86) International application number: PCT/CN2017/105829
(87) International publication number: WO 2019/071511

(56) References cited:
- CN-A- 101 253 476
- CN-A- 101 950 294
- CN-A- 102 171 654
- US-A1- 2012 079 464
- US-A1- 2012 131 546
- Anonymous: "Directives - graphql-php", https://webonyx.github.io/, 17 September 2017 (2017-09-17), pages 1-2, XP055779895, Retrieved from the Internet: URL:https://web.archive.org/web/2017091712 0616/https://webonyx.github.io/graphql-php /type-system/directives/ [retrieved on 2021-02-25]

## Description

### Background

An application may include machine-readable instructions executable by a processing resource to perform specific tasks or jobs. Some applications may operate by utilizing computational resources from a single source such as a single computational system, a single virtual location, a single computing device, etc. Some applications may be a distributed application. A distributed application may utilize computational resources from multiple sources such as multiple computational systems, multiple virtual locations, multiple computing devices, remote servers, cloud computing resources, etc. Document by anonymous describes "Directives - graphql-php", https://webonyx.github.io, 17 September 2017, pages 1-2.

### Brief Description of the Drawings

Figure 1 illustrates a block diagram of a computing system according to the present disclosure.
Figure 2 illustrates a block diagram of a computing system according to the present disclosure.
Figure 3 illustrates a diagram of a method according to the present disclosure.
Figure 4 illustrates instructions according to the present disclosure.
Figure 5 illustrates instructions according to the present disclosure.

### Detailed Description

Software applications may be developed with a web-first or even a web-only development model. For example, applications may be developed as distributed applications or application services that at least partially operate from and/or utilize computational resources distributed across a network. The distributed applications may, for example, operate on and/or communicate with multiple servers or devices on a same computer network. The data that the distributed application utilizes in its operation may be spread over more than one server or device in the computer network. In some examples, the distributed application may be broken into separate sets of machine-readable instructions executable by a processing resource. For example, the distributed application may include client-based machine-readable instructions and server and/or cloud-based machine-readable instructions. The client-based machine-readable instructions may operate on a client device and access data from a server or from a computing cloud environment, while the server or cloud-based machine-readable instructions may process the data. In short, distributed applications may utilize computational resources that are distributed at distinct locations in a network in order to perform their specific tasks or jobs.

In developing such distributed applications, interface design may be a complex process. Specifically, an interface design may be configured to provide external developers access to application programming interfaces (APIs) for building additional functionality to drive the utility of the application service. Additionally, the interface design may be configured to abstract APIs into a syntax that is easily digestible within the context of a web browser through which the application operates.

Two distributed application development methodologies may include utilizing a representational state transfer (REST) application model and a GraphQL application model. The REST application model may include a specification for addressing resources utilizing the semantics that are available already within the hypertext transfer protocol (HTTP). A client may utilize the REST API to make requests for addressable distributed resources. Utilizing a REST API may include utilizing multiple endpoints that return fixed data structures. An application server may translate requests to and from a data service utilized by the application and the client utilizing the application.

The GraphQL application model may include a specification that may attempt to provide introspection into APIs by providing a syntax that can be used to query an application server about its available APIs. The client may utilize GraphQL to make requests for addressable resources. GraphQL may enable declarative data fetching. An application server may relegate a data request by an application to the GraphQL serve. A GraphQL server may expose a single endpoint and responds with precisely the data that a client requests. The REST and GraphQL mechanisms may be used by developers to introspect and manipulate resources hosted by the application.

However, large scale development of distributed applications may carry with it the complexities of the existence of multiple sources of truth for data being utilized by the application. For example, within an enterprise there may exist multiple representations of the concept of a customer that differ across organizations and applications. In an example, a marketing team have a view of customer as a selling tool, while shipping, account receivable, service and support, and so on have differing and/or distinct views of the customer. Consolidating all of these views in an enterprise architecture may be complex since each of the organizations and their applications are constantly changing to adapt new features and capabilities. Further, organizations utilize outside resources such as customer data hosted in customer relationship management computing companies which may further erode the couplings between the various views of the customer within the example enterprise.

Compositing these various views may include creating relationships between distributed data from multiple resources and/or combining the objects from multiple data resources to form a single resource view. In both the semantics of REST and the semantics of the GraphQL, there is not an inherent mechanism to support compositing of resources.

Compositing may be attempted at the client. Compositing multiple views of distributed data resources at the client may include the client application knowing and correlating identifiers between the resources within disparate systems. The client may also be aware of the relevant elements that make up each view of data and how to manipulate that data correctly. Therefore, maintaining a client-based compositing scheme may include maintaining correlation identities across multiple data sources. In some examples, each pair of resources could potentially have a unique correlation. Maintaining the client-based compositing scheme may also include maintaining consistency in a view of data when each of the supporting systems is also a live system subject to updates. Thus, the compositing client may implement a mechanism to keep data views up-to-date. Maintaining the client-based compositing scheme may include operations to synchronize updates across each data service ensuring atomic operations and the ability to rollback transactions. Additionally, client-based compositing may include maintenance of the client-based application code involved in rendering accurate representations of data when one or more of the data services changes definitions for its data types. Maintaining the client-based compositing scheme in a web-based distributed application may additionally include the added complexity of translating from a binary protocol and/or API into a web environment.

Compositing may be attempted at the application. Application-based compositing may be similar to client-based compositing, except that the compositing occurs within an application server associated with the application. As such, the computational intelligence for managing the correlations and operations within the context of the application. In addition, the application may act as a gateway between services and/or data sources that would otherwise be restricted from direct access. Maintaining the application-based compositing scheme may include creating a service layer redundancy that is continuously maintained over time. Maintenance of the service layer redundancy may be a relatively higher priority when the application is being utilized as an interface to other pre-existing applications relying on the service layer redundancy. Application-based compositing may also include implementing a mechanism to keep data views up-to-date.

In both of the client-based and application-based compositing models, compositing may involve additional effort and maintenance as described above on behalf of application developers. In addition, each layer or linkage between subsystems may contain its own set of complexities and management specifications, such as API semantics, preferred data type representation, control methods for accessing data, and/or measures for preserving data integrity.

In contrast, examples of the present disclosure may include a model for compositing distributed data resources based on a syntax for extending schema models. For example, a system according to the present disclosure may include a processing resource and a memory resource storing instructions executable by the processing resource to utilize a schema language to extend a schema element, utilize the schema language to specify a source location of the schema element existing in a plurality of source locations, utilize the schema language to specify a custom action to perform based on the source location, and utilize the schema language to specify a plurality of source-dependent syntaxes to the custom action.

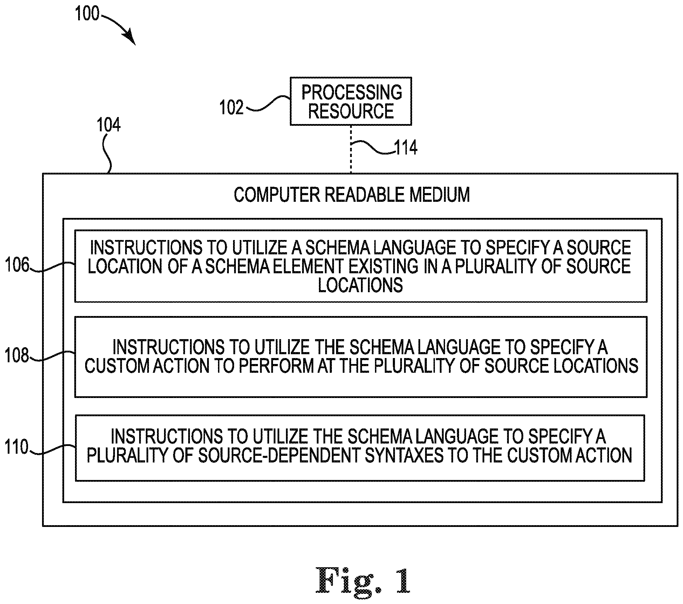

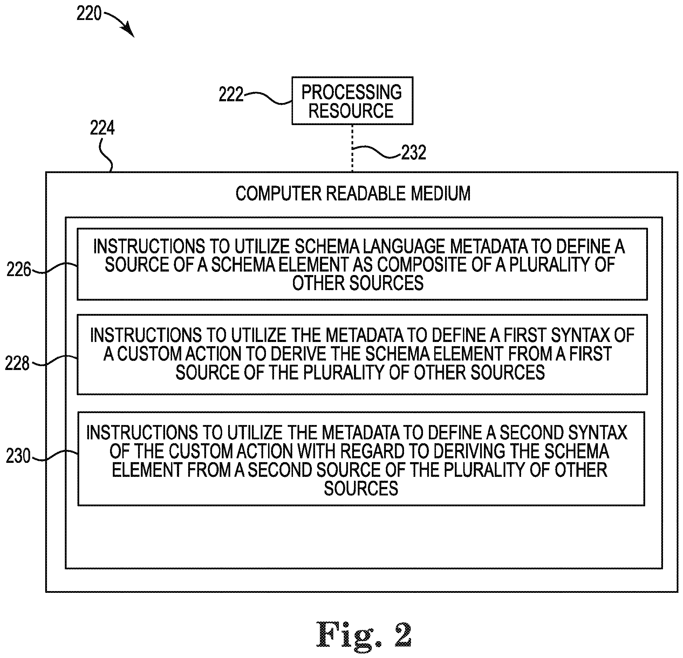

Figure 1 is a block diagram of a computing system 100 according to the present disclosure. The computing system 100 may be the same as or different than the computing system 220 illustrated in figure 2. The computing system 100 may include at least one computing device that is capable of communicating with at least one remote system. In the example of Figure 1, computing system 100 includes a processing resource 102 and a computer readable medium 104. Although the following descriptions refer to a single processing resource and a single computer-readable medium, the descriptions may also apply to a system with multiple processing resources and computer-readable mediums. In such examples, the instructions may be distributed (e.g., stored) across multiple computer-readable mediums and the instructions may be distributed (e.g., executed by) across multiple processing resources.

Processing resource 102 may be a central processing unit (CPU), a microprocessor, and/or other hardware devices suitable for retrieval and execution of instructions stored in the computer-readable medium 104. In the example shown in Figure 2, processing resource 102 may retrieve, execute, and/or send instructions 106, 108, and 110 for extending a schema element. As an alternative or in addition to retrieving and executing instructions, processing resource 102 may include an electronic circuit comprising a number of electronic components for performing the functionality of an instruction in computer-readable medium 104. For example, the processing resource 102 may include an application-specific circuit (ASIC). With respect to the executable instruction representations (e.g., boxes) described and shown herein, it should be understood that part or all of the executable instructions and/or electronic circuits included within a particular box may be included in a different box shown in the figures or in a different box not shown.

Computer-readable medium 104 may be any electronic, magnetic, optical, or other physical storage device that stores executable instructions. Thus, computer-readable medium 104 may be, for example, Random Access Memory (RAM), an Electrically-Erasable Programmable Read-Only Memory (EEPROM), a storage drive, an optical disc, and the like. Computer-readable medium 104 may be disposed within system 100, as shown in Figure 1. In this situation, the executable instructions may be "installed" on the system 100. Additionally and/or alternatively, computer-readable medium 104 may be a portable, external or remote storage medium, for example, that allows system 100 to download the instructions from the portable/external/remote storage medium. In this situation, the executable instructions may be part of an "installation package". As described herein, computer-readable medium 104 may be encoded with executable instructions for extending a schema element.

The computer-readable medium 104 can be in communication with the processing resource 102 via a communication link (e.g., a path) 114. The communication link 114 can be local or remote to a machine (e.g., a computing system) associated with the processing resource 102. Examples of a local communication link 114 can include an electronic bus internal to a machine (e.g., a computing system) where the machine readable medium 104 is one of volatile, non-volatile, fixed, and/or removable storage medium in communication with the processing resource 102 via the electronic bus.

In some examples of the present disclosure, the instructions 106, 108, and 110 may be executed by the processing resource 102 to utilize a schema language to extend a schema element. A schema language may include a definition of how data is stored and related to other data within a data store. For example, a schema may include a data definition language such as standard query language (SQL). A schema element may include a representation of an addressable data item or datum within the data store.

A basic schema element may define a data element by name, data type, and its location within the data store. Extending the schema element may include providing additional definitions, beyond those contained in a basic schema, related to data retrieval in the schema language. The additional definitions may facilitate data location and compilation of data elements.

Referring to Figure 1, instructions 106, when executed by a processor (e.g., processing resource 102), may cause the computing system 100 to utilize a schema language to specify a source location of a schema element. The source location of a schema element may include the data source or data sources that are to be utilized and/or drawn from in deriving the schema element in response to a command included in the utilized schema language. For example, a source location may include a database or a data service.

In some examples, the schema language may be utilized to specify a source location of the schema element existing in a plurality of source locations. For example, the schema element may include data that is stored in and/or sourced from a variety of distinct data sources. According to the invention, the distinct data sources may be in distinct physical locations, have distinct data formats, and operate utilizing distinct syntaxes.

Specifying the source location of the schema element may include defining which data sources the schema element is stored in and/or sourced from. Specifying the source location of the schema element may include defining a type associated with the data source that the schema element is stored in and/or sourced from. For example, defining the type may include defining whether a data source storing the data of the schema element is a persistent type memory or volatile type memory.

Specifying the source location may include defining the source location as a composite of the plurality of source locations. The plurality of source locations may be located at a plurality of distinct resource domains. Defining the source location as a composite of the plurality of locations may include specifying each of a plurality of distinct resource domains associated with each of the distinct data sources storing or providing the data of the schema element.

Referring to Figure 1, instructions 108, when executed by a processor (e.g., processing resource 102), may cause the computing system 100 to cause a computing system to utilize the schema language to specify an action to perform. An action may include an action to take with regard to the data sources storing and/or providing the data of the schema element. Examples of an action may include a create, read, update, and/or delete action.

The schema may be utilized to specify a custom action. A custom action may include a definition of the action that is customized to each of the plurality of source locations. For example, a custom action may include a definition of how to translate a requested action formatted in a syntax of a composite data source into the specific actions formatted in the syntax of each of the composited distinct data sources storing and/or providing the schema element data.

As described above, the source location may include a composite of a plurality of source locations. The custom action may, therefore, be tailored to each of the plurality of source locations. For example, each data source storing and/or providing the data of the schema element may include specific implementation instruction sets and/or syntax for performing an action to the data source. Defining the custom action may include providing a translation of the custom action within the schema language that is specific to the specific implementation instruction sets and/or syntax for performing an action to the data source.

Referring to Figure 1, instructions 108, when executed by a processor (e.g., processing resource 102), may cause the computing system 100 to utilize the schema language to specify a plurality of source-dependent syntaxes to the custom action. The syntax to the custom action may be a syntax that is supported by a data source storing and/or providing data of a schema element. Since data of the schema element may be distributed among distinct data sources, the computing system 100 may specify a plurality of data source-dependent syntaxes that correspond to respective ones of the data sources.

The schema may be utilized to translate the custom action from its original syntax or format to a syntax or format that is supported by the underlying data source or data sources. The schema utilized may translate the custom action by specifying a syntax for the custom action applicable to each of a plurality of distinct data sources utilizing distinct syntaxes.

A host at each of the plurality of source locations may utilize a language. Specifying the source-dependent syntax of each particular source location (e.g., the source locations utilized in deriving the schema element) may include identifying the syntax utilized at each particular source location. The source-dependent syntax for the particular source location may be selected based on the language utilized by a host at the source location.

In some examples, a source location may be associated with an application programming interface (API). An API may include a set of subroutine definitions, protocols, and/or tools providing defined methods of communication between client devices and data sources. The API associated with a particular source location may utilize a specific syntax. The source-dependent syntax for the particular source location may be selected based on the language utilized by the API associated with the source location.

Utilizing the computing system 100 may provide a mechanism to define a schema element as a composite of other resources. As such, a schema element may be defined as a composite of data sources spanning multiple resource domains, such as different database servers, other APIs, and other data storage mediums.

Additionally, the computing system 100 may provide a mechanism to define syntax specific to each of a plurality of data sources. In this manner, the syntax utilized by a data source may be selected based on which syntax and data source format allows the underlying data to be stored in a relatively most efficient form, such as storing historical data within a time-series model, storing relational data within a relational data source, storing document data within a document warehouse, or storing metric data within a memory cache model. The determination of a syntax and a relatively most efficient storage form may be made without regard to concerns over compatibility with a particular syntax utilized by a client.

Similarly, providing a mechanism to define syntax specific to each of a plurality of data sources may allow for the deviation in resource access based on the syntax of the data sources. The deviation may not only allow for the compositing discussed above, but may also accommodate a seamless migration of resources from one data source type to another data source type without implementing low-level instructions executable by the processing resource 102 to maintain and/or update data source relationships and calling conventions.

Providing a mechanism to define syntax specific to each of a plurality of data sources may allow for implementation of a generalized schema language for web-based application development that allows application calls to span multiple resource domains. Likewise, the computing system 100 may allow for a generalization of a parser than can composite schema elements from multiple resource domains based on a template definition of the compositing behavior.

Figure 2 is a block diagram of a computing system 220 according to the present disclosure. The computing system 220 may be the same as or different than the computing system 100 illustrated in Figure 1. The computing system 220 may include at least one computing device that is capable of communicating with at least one remote system. In the example of Figure 2, computing system 220 includes a processing resource 222 and a computer readable medium 224. Although the following descriptions refer to a single processing resource and a single computer-readable medium, the descriptions may also apply to a system with multiple processing resources and computer-readable mediums. In such examples, the instructions may be distributed (e.g., stored) across multiple computer-readable mediums and the instructions may be distributed (e.g., executed by) across multiple processing resources.

Processing resource 222 may be a central processing unit (CPU), a microprocessor, and/or other hardware devices suitable for retrieval and execution of instructions stored in the computer-readable medium 224. In the example shown in Figure 2, processing resource 222 may retrieve, execute, and/or send instructions 226, 228, and 230 for extending a schema element. As an alternative or in addition to retrieving and executing instructions, processing resource 222 may include an electronic circuit comprising a number of electronic components for performing the functionality of an instruction in computer-readable medium 224. For example, the processing resource 222 may include an application-specific circuit (ASIC). With respect to the executable instruction representations (e.g., boxes) described and shown herein, it should be understood that part or all of the executable instructions and/or electronic circuits included within a particular box may be included in a different box shown in the figures or in a different box not shown.

Computer-readable medium 224 may be any electronic, magnetic, optical, or other physical storage device that stores executable instructions. Thus, computer-readable medium 104 may be, for example, Random Access Memory (RAM), an Electrically-Erasable Programmable Read-Only Memory (EEPROM), a storage drive, an optical disc, and the like. Computer-readable medium 224 may be disposed within computing system 220, as shown in Figure 2. In this situation, the executable instructions may be "installed" on the computing system 220. Additionally and/or alternatively, computer-readable medium 244 may be a portable, external or remote storage medium, for example, that allows computing system 220 to download the instructions from the portable/external/remote storage medium. In this situation, the executable instructions may be part of an "installation package". As described herein, computer-readable medium 224 may be encoded with executable instructions for extending a schema element.

The computer-readable medium 224 can be in communication with the processing resource 222 via a communication link (e.g., a path) 232. The communication link 232 can be local or remote to a machine (e.g., a computing system) associated with the processing resource 222. Examples of a local communication link 232 can include an electronic bus internal to a machine (e.g., a computing system) where the machine readable medium 224 is one of volatile, non-volatile, fixed, and/or removable storage medium in communication with the processing resource 222 via the electronic bus.

Referring to Figure 2, instructions 226, when executed by a processor (e.g., processing resource 222), may cause the computing system 220 to utilize a schema to define a source of a schema element. The computing system 220 may utilize schema language metadata to define the source of the schema element. Schema language may include a definition and description of a request from an application to a data source, where the definition and description of the request utilized a specific semantic format or syntax. An example of schema language may include a GraphQL interface definition extended language. The schema language may be extended by the addition of schema language metadata. Schema language metadata may include data in the schema language which is not defining or describing an action or the particular data that is to be manipulated in the execution of the action. For example, schema language metadata may include a definition of a location of a data source and/or a specification of whether a first portion of the schema element is stored in a volatile memory and a second portion of the schema element is stored in a non-volatile memory.

The computing system 220 may utilize the schema language metadata to define a source of a schema element as a composite of a plurality of other sources. Defining the source of a schema element as a composite of a plurality of other sources may include defining the schema element as a combination of the schemas referenced underneath the composite, those referenced schemas being schemas associated with varied data sources storing and/or providing the data of the schema element. For example, defining the schema element as a composite of the other data sources that store and/or provide the data of the schema element may include defining the location and/or memory type of each of other the data sources.

Referring to Figure 2, instructions 228, when executed by a processor (e.g., processing resource 222), may cause the computing system 220 to utilize the schema language metadata to define a first syntax of a custom action to derive the schema element from a first source of the plurality of other sources. Since the schema element may be defined as a composite of the data sources storing and/or providing the schema element, the custom action utilized to derive a schema element may be directed to a plurality of data sources.

As described above, each of the plurality of other data sources may operate utilizing a particular syntax. The syntax of a first data source may be a different syntax than a syntax utilized by a second data source. As such, the schema language metadata may be utilized to identify the particular syntax utilized by the first data source and, therefore, the syntax that the custom action should be translated to in order to derive the data of the schema element from the first data source.

Referring to Figure 2, instructions 230, when executed by a processor (e.g., processing resource 222), may cause the computing system 220 to utilize the metadata to define a second syntax of the custom action with regard to deriving the schema element from a second source of the plurality of other sources. As described above, each of the plurality of data resources that a schema element is derived from, in response to a custom action, may operate utilizing a distinct syntax. In an example, the identified first syntax may include a structured query language (SQL) syntax and the second syntax may include a Javascript syntax.

Rather than generating custom actions in each individual syntax and communicating them individually to each of the plurality of resources, the computing system 220 may utilize the schema language metadata to translate the custom action to a syntax utilized by each of the plurality of data sources. The metadata may provide a definition to effectuate the translation of the custom action to the distinct syntax of each of the plurality of other sources.

The computing system 220 may include instructions that when executed by a processor (e.g., processing resource 222), may cause the computing system 220 to parse the composite definition of the plurality of sources of the schema element, the custom action, and the first and second syntaxes from the schema language metadata. A web-based application may then derive the schema element from the first source and from the second source based on the parsed composite definition of the plurality of sources of the schema element, the custom action, and the first and second syntaxes. As such, the computing system 220 may result in the derivation of the schema element from across a plurality of distinct sources utilizing distinct syntaxes by utilizing the translation instructions and definitions included in the metadata extension of the schema language. Therefore, the computing system 220 may allow compositing through denotations of definitions within the schema language. As such, the computing system 220 may remove the complexities of compositing at a client or within an application, such as creating, maintaining, updating, and/or synchronizing correlation across multiple data sources.

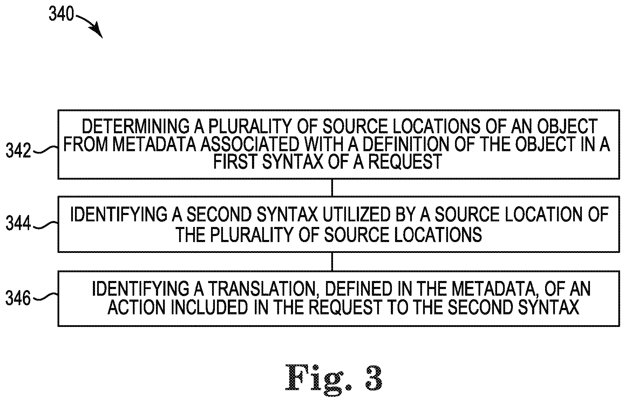

Figure 3 illustrates a method 340 according to the invention. The method 340 may be performed utilizing the computing system 100 in Figure 1 and/or the computing system 200 in Figure 2. At 342, the method 340 includes determining a plurality of source locations of an object. The object may include an element identified in a request from a distributed application to a data source such as a server. The object may include a particular composition of data to be utilized by the distributed application. The object may be distributed across a plurality of source locations.

The source locations from which the object is bederived are determined based on parsing metadata associated with a definition of the object in first syntax of the request. The first syntax may include a basic schema language that is extended by the inclusion of metadata associated with the object. The schema language of the request may be extended with the metadata in order to be utilized in identifying the plurality of sources. The request includes an action and an identification of an object, for example in the schema language and the schema language may be extended with metadata according to a schema language extension template and/or a semantics scheme associated with schema language extension.

At 344, the method 340 includes identifying a second syntax utilized by a source location of the plurality of source locations. The second syntax is a different and/or distinct syntax from the first syntax. As such, an action specified in the first syntax gets translated to the second syntax before the object can be derived from the source location. The second syntax may be identified from an API that processes requests to the source and/or a language utilized by a host at the source location. In some examples, the syntaxes of each of the plurality of distributed source locations storing and/or providing the data of the object may be identified.

At 346, the method 340 includes identifying a translation of an action included in the request. As described above the request includes metadata. The metadata provides a plurality of different syntaxes. The plurality of different syntaxes are a plurality of different syntaxes utilized by the plurality of source locations. For example, the source locations may be hosted within distinct systems utilizing distinct schema language syntaxes.

The metadata also include translations of an action specified in the syntax of the request. The action included in the request gets translated from the first syntax to the second syntax based on a translation template for the second syntax. For example, a translation template may include a set of parameters defining the proper format of an action in the second syntax. The translation template may include actions in other syntaxes that correspond to the action in the second syntax. The translation template may include instructions to alter an action in a first syntax to a corresponding properly formatted action in the second context.

As such, the metadata include the translation and other translations of the action into the plurality of different syntaxes. In an example, the metadata may serve as an index of action translations to different syntaxes that may be utilized and understood by the plurality of resources storing and/or providing an object in the request.

As described above, the second syntax of utilized by the source location is identified and the metadata include the translations of actions in the request to various syntaxes including the second syntax. Therefore, the translation of an action included in the request to the second syntax is defined in the metadata. As such, the translation is identified from the definition provided in the metadata of the request. A plurality of translations, each one corresponding to a distinct source location of the object, are identified.

The identified translations are utilized to derive the object from the plurality of source locations. For each source location, the corresponding translated action may be carried out to derive the object. Therefore, the object may be derived from the plurality of source locations hosted within distinct systems utilizing distinct schema language syntaxes.

In some examples, the action may include a mutation as opposed to a query or a subscription. A mutation may include a change to data on a source location such as a server. The mutation may include a change to the data followed by a fetch of the piece of data that was changed all in one operation. In contrast, a query may include an operation to fetch data in a read-only manner and a subscription may include an operation to get a real-time feed of data from a source location such as a server. Where the action specifies a mutation to the object, the mutation may be formed to the plurality of source locations. For example, the data stored and/or provided at each of the source locations may be changed. Therefore, the mutation may be performed to each of the plurality of sources based on a plurality of translations of the action including the translation to the second syntax. Since each of the plurality of sources may utilize a distinct syntax, performing the mutation may include performing the translated action in the syntax specific to each source location.

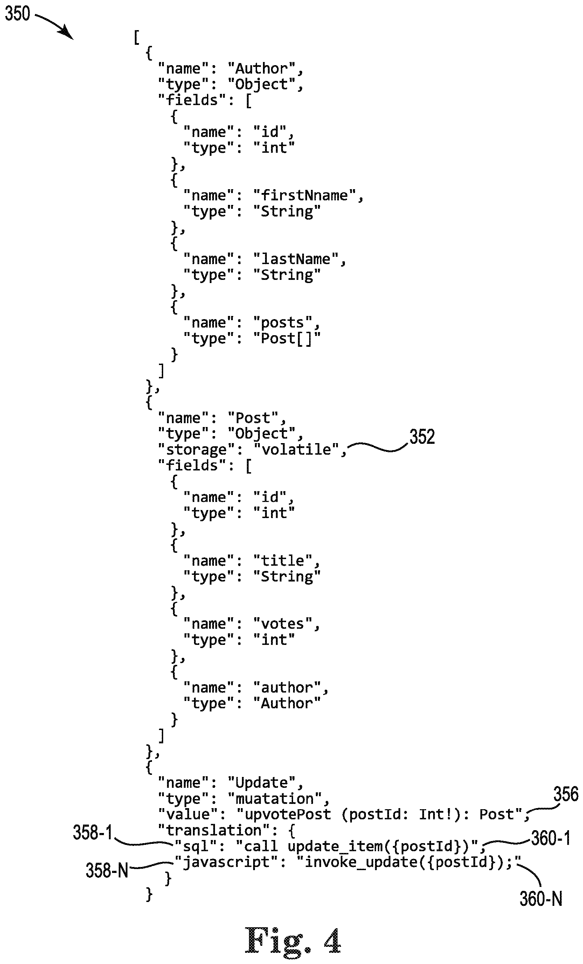

Figure 4 illustrates instructions 350 according to the present disclosure. The instructions 350 may be executable by a computing device such as computing device 100 in Figure 1 and/or computing device 220. The instructions 350 may include a request formatted in a schema domain language. The instructions 350 may include a source type 352. The source type 352 may specify a type of a source of data of a schema element. The source type 352 may include a location designator such as "volatile" or "nonvolatile" indicating the type of memory storing and/or providing the data of the schema element. The source code may include a value designator 356. The value designator 356 may specify the action to be taken in a first syntax.

The instructions 350 may also include a translation 360-1 ... 360-N of the value designator 356 into a second syntax. The translation 360-1 ... 360-N of the value designator 356 into a second syntax may be syntax specific. The instructions 350 may include syntax designators 358-1 ...358-N that specify the syntax associated with the corresponding translation 360-1 ...360-N.

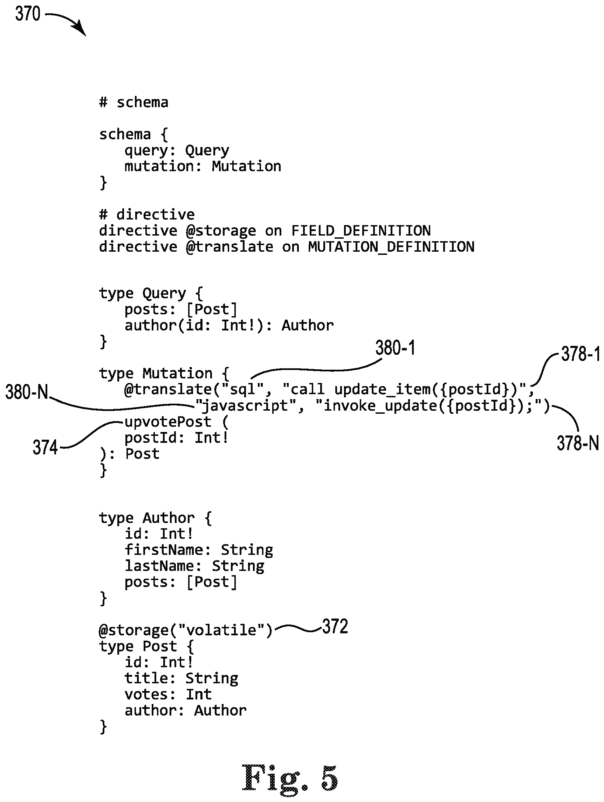

Figure 5 illustrates instructions 370 according to the present disclosure. The instructions 370 may be executable by a computing device such as computing device 100 in Figure 1 and/or computing device 220. The instructions 370 may include a request formatted in a schema domain language. For example, the instructions 370 may include a GraphQL interface definition language extension. The instructions 370 may include a source type 372. The source type 372 may specify a type of a source of data of a schema element. The source type 372 may include a location designator such as "volatile" or "nonvolatile" indicating the type of memory storing and/or providing the data of the schema element. The source code may include a value designator 374. The value designator 374 may specify the action to be taken in a first syntax.

The instructions 370 may also include a translation 378-1 ... 378-N of the value designator 374 into a second syntax. The translation 378-1 ... 378-N of the value designator 374 into a second syntax may be syntax specific. The instructions 370 may include syntax designators 380-1 ...380-N that specify the syntax associated with the corresponding translation 378-1 ... 378-N.

In the foregoing detailed description of the present disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the present disclosure.

The figures herein follow a numbering convention in which the first digit corresponds to the drawing figure number and the remaining digits identify an element or component in the drawing. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense. As used herein, the designator "N", particularly with respect to reference numerals in the drawings, indicates that a number of the particular feature so designated can be included with examples of the present disclosure. The designators can represent the same or different numbers of the particular features. Further, as used herein, "a number of" an element and/or feature can refer to one or more of such elements and/or features. As used herein, "logic" is an alternative or additional processing resource to perform a particular action and/or function, etc., described herein, which includes hardware, e.g., various forms of transistor logic, application specific integrated circuits (ASICs), etc., as opposed to computer executable instructions, e.g., software firmware, etc., stored in memory and executable by a processor.

## Claims

1. A system comprising:
a processing resource; and
a memory resource storing instructions executable by the processing resource to:
determine a plurality of source locations of an object from metadata associated with a definition of the object in a first syntax of a request to perform an action with regard to the object, wherein distinct data sources may be in distinct physical locations, have distinct data formats, and operate utilizing distinct syntaxes;
identify a respective second syntax utilized by each source location of the plurality of source locations;
identify a respective translation, defined in the metadata in a translation template, of the action included in the request to the respective second syntax;
translate the action included in the request from the first syntax to the respective second syntax based on the identified translation; and
derive the object from the plurality of source locations hosted within distinct systems utilizing the action translated in the respective distinct syntax of each of the plurality of source locations.

2. The system of claim 1, wherein the plurality of source locations is defined as a composite source location in the metadata.

3. The system of claim 2, wherein the plurality of source locations are located at a plurality of distinct resource domains.

4. A non-transitory computer-readable medium containing instructions executable by a processing resource to cause the processing resource to:
determine a plurality of source locations of an object from metadata associated with a definition of the object in a first syntax of a request to perform an action with regard to the object, wherein distinct data sources may be in distinct physical locations, have distinct data formats, and operate utilizing distinct syntaxes;
identify a respective second syntax utilized by each source location of the plurality of source locations;
identify a respective translation, defined in the metadata in a translation template, of the action included in the request to the respective second syntax;
translate the action included in the request from the first syntax to the respective second syntax based on the identified translation; and
derive the object from the plurality of source locations hosted within distinct systems utilizing the action translated in the respective distinct syntax of each of the plurality of source locations.

5. The non-transitory computer-readable medium of clam 4, wherein the first syntax is a structured query language, SQL, syntax.

6. The non-transitory computer-readable medium of claim 5, wherein the second syntax is a Javascript syntax.

7. The non-transitory computer-readable medium of clam 4, wherein a schema language syntax comprises a GraphQL interface definition language extension.

8. A computer-implemented method, comprising:
determining a plurality of source locations of an object from metadata associated with a definition of the object in a first syntax of a request to perform an action with regard to the object, wherein distinct data sources may be in distinct physical locations, have distinct data formats, and operate utilizing distinct syntaxes;
identifying a respective second syntax utilized by each source location of the plurality of source locations; and
identifying a respective translation, defined in the metadata in a translation template, of the action included in the request to the respective second syntax;
translating the action included in the request from the first syntax to the respective second syntax based on the identified translation; and
deriving the object from the plurality of source locations hosted within distinct systems utilizing the action translated in the respective distinct syntax of each of the plurality of source locations.

## Patentansprüche

1. System, das Folgendes umfasst:
eine Verarbeitungsressource; und
eine Speicherressource, die Anweisungen speichert, die durch die Verarbeitungsressource ausführbar sind zum:
Bestimmen einer Vielzahl von Quellorten eines Objekts aus Metadaten, die einer Definition des Objekts in einer ersten Syntax einer Anforderung zugeordnet sind, um eine Aktion in Bezug auf das Objekt auszuführen, wobei eindeutige Datenquellen sich in eindeutigen physischen Positionen befinden können, eindeutige Datenformate aufweisen und unter Verwendung eindeutiger Syntaxen arbeiten;
Identifizieren einer jeweiligen zweiten Syntax, die von jedem Quellort der Vielzahl von Quellorten verwendet wird;
Identifizieren einer jeweiligen Übersetzung, die in den Metadaten in einer Übersetzungsvorlage definiert ist, der Aktion, die in der Anforderung der jeweiligen zweiten Syntax eingeschlossen ist;
Übersetzen der in der Anforderung eingeschlossenen Aktion von der ersten Syntax in die jeweilige zweite Syntax auf der Basis von der identifizierten Übersetzung; und
Ableiten des Objekts von der Vielzahl von Quellorten, die in eindeutigen Systemen gehostet werden, unter Verwendung der Aktion, die in der jeweiligen eindeutigen Syntax jedes der Vielzahl von Quellorten übersetzt wird.

2. System nach Anspruch 1, wobei die Vielzahl von Quellorten als ein zusammengesetzter Quellort in den Metadaten definiert ist.

3. System nach Anspruch 2, wobei sich die Vielzahl von Quellorten in einer Vielzahl von eindeutigen Ressourcendomänen befindet.

4. Nichtflüchtiges computerlesbares Medium, das Anweisungen, die durch eine Verarbeitungsressource ausführbar sind, enthält, um die Verarbeitungsressource zu Folgendem zu veranlassen:
Bestimmen einer Vielzahl von Quellorten eines Objekts aus Metadaten, die einer Definition des Objekts in einer ersten Syntax einer Anforderung zugeordnet sind, um eine Aktion in Bezug auf das Objekt auszuführen, wobei eindeutige Datenquellen sich in eindeutigen physischen Positionen befinden können, eindeutige Datenformate aufweisen und unter Verwendung eindeutiger Syntaxen arbeiten;
Identifizieren einer jeweiligen zweiten Syntax, die von jedem Quellort der Vielzahl von Quellorten verwendet wird;
Identifizieren einer jeweiligen Übersetzung, die in den Metadaten in einer Übersetzungsvorlage definiert ist, der Aktion, die in der Anforderung des jeweiligen zweiten Syntax eingeschlossen ist;
Übersetzen der in der Anforderung eingeschlossenen Aktion von der ersten Syntax in die jeweilige zweite Syntax auf der Basis von der identifizierten Übersetzung; und
Ableiten des Objekts von der Vielzahl von Quellorten, die in eindeutigen Systemen gehostet werden, unter Verwendung der Aktion, die in der jeweiligen eindeutigen Syntax jedes der Vielzahl von Quellorten übersetzt wird.

5. Nichtflüchtiges computerlesbares Medium nach Anspruch 4, wobei die erste Syntax eine Syntax einer strukturierten Abfragesprache, SQL, ist.

6. Nichtflüchtiges computerlesbares Medium nach Anspruch 5, wobei die zweite Syntax eine Javascript-Syntax ist.

7. Nichtflüchtiges computerlesbares Medium nach Anspruch 4, wobei eine Schemasprachensyntax eine GraphQL-Schnittstellendefinitionssprachenerweiterung umfasst.

8. Computer-implementiertes Verfahren, das umfasst:
Bestimmen einer Vielzahl von Quellorten eines Objekts aus Metadaten, die einer Definition des Objekts in einer ersten Syntax einer Anforderung zugeordnet sind, um eine Aktion in Bezug auf das Objekt durchzuführen, wobei eindeutige Datenquellen sich in eindeutigen physischen Positionen befinden können, eindeutige Datenformate aufweisen und unter Verwendung eindeutiger Syntaxen arbeiten;
Identifizieren einer jeweiligen zweiten Syntax, die von jedem Quellort der Vielzahl von Quellorten verwendet wird; und
Identifizieren einer jeweiligen Übersetzung, die in den Metadaten in einer Übersetzungsvorlage definiert ist, der Aktion, die in der Anforderung des jeweiligen zweiten Syntax eingeschlossen ist;
Übersetzen der in der Anforderung eingeschlossenen Aktion von der ersten Syntax in die jeweilige zweite Syntax auf der Basis von der identifizierten Übersetzung; und
Ableiten des Objekts von der Vielzahl von Quellorten, die in eindeutigen Systemen gehostet werden, unter Verwendung der Aktion, die in der jeweiligen eindeutigen Syntax jedes der Vielzahl von Quellorten übersetzt wird.

## Revendications

1. Système comprenant :
une ressource de traitement ; et
une ressource de mémoire stockant des instructions exécutables par la ressource de traitement pour :
déterminer une pluralité d'emplacements sources d'un objet à partir de métadonnées associées à une définition de l'objet dans une première syntaxe d'une demande pour mettre en oeuvre une action concernant l'objet, des sources de données distinctes pouvant être dans des emplacements physiques distincts, avoir des formats de données distincts, et fonctionner en utilisant des syntaxes distinctes ;
identifier une seconde syntaxe respective utilisée par chaque emplacement source de la pluralité d'emplacements sources ;
identifier une traduction respective, définie dans les métadonnées dans un modèle de traduction, de l'action incluse dans la demande, à la seconde syntaxe respective ;
traduire l'action incluse dans la demande de la première syntaxe à la seconde syntaxe respective en fonction de la traduction identifiée ; et
dériver l'objet à partir de la pluralité d'emplacements sources hébergés au sein de systèmes distincts en utilisant l'action traduite dans la syntaxe distincte respective de chacun parmi la pluralité d'emplacements sources.

2. Système selon la revendication 1, dans lequel la pluralité d'emplacements sources est définie en tant qu'emplacement source composite dans les métadonnées.

3. Système selon la revendication 2, dans lequel la pluralité d'emplacements sources sont localisés au niveau d'une pluralité de domaines de ressources distincts.

4. Support non transitoire lisible par ordinateur contenant des instructions exécutables par une ressource de traitement pour amener la ressource de traitement à :
déterminer une pluralité d'emplacements sources d'un objet à partir de métadonnées associées à une définition de l'objet dans une première syntaxe d'une demande pour mettre en oeuvre une action concernant l'objet, des sources de données distinctes pouvant être dans des emplacements physiques distincts, avoir des formats de données distincts, et fonctionner en utilisant des syntaxes distinctes ;
identifier une seconde syntaxe respective utilisée par chaque emplacement source de la pluralité d'emplacements sources ;
identifier une traduction respective, définie dans les métadonnées dans un modèle de traduction, de l'action incluse dans la demande, à la seconde syntaxe respective ;
traduire l'action incluse dans la demande de la première syntaxe à la seconde syntaxe respective en fonction de la traduction identifiée ; et
dériver l'objet à partir de la pluralité d'emplacements sources hébergés au sein de systèmes distincts en utilisant l'action traduite dans la syntaxe distincte respective de chacun parmi la pluralité d'emplacements sources.

5. Support non transitoire lisible par ordinateur selon la revendication 4, dans lequel la première syntaxe est une syntaxe en langage d'interrogation structuré, SQL.

6. Support non transitoire lisible par ordinateur selon la revendication 5, dans lequel la seconde syntaxe est une syntaxe en JavaScript.

7. Support non transitoire lisible par ordinateur selon la revendication 4, dans lequel une syntaxe de langage de schéma comprend une extension de langage de définition d'interface GraphQL.

8. Procédé implémenté par ordinateur, comprenant :
la détermination d'une pluralité d'emplacements sources d'un objet à partir de métadonnées associées à une définition de l'objet dans une première syntaxe d'une demande pour mettre en oeuvre une action concernant l'objet, des sources de données distinctes pouvant être dans des emplacements physiques distincts, avoir des formats de données distincts, et fonctionner en utilisant des syntaxes distinctes ;
l'identification d'une seconde syntaxe respective utilisée par chaque emplacement source de la pluralité d'emplacements sources ; et
l'identification d'une traduction respective, définie dans les métadonnées dans un modèle de traduction, de l'action incluse dans la demande à la seconde syntaxe respective ;
la traduction de l'action incluse dans la demande de la première syntaxe à la seconde syntaxe respective en fonction de la traduction identifiée ; et
la dérivation de l'objet à partir de la pluralité d'emplacements sources hébergés au sein de systèmes distincts en utilisant l'action traduite dans la syntaxe distincte respective de chacun parmi la pluralité d'emplacements sources.
